# EUROPEAN PATENT APPLICATION

(11) **EP 3 995 731 A1**
(43) Date of publication of application: **11.05.2022**
(21) Application number: 21382997.1
(22) Date of filing: 04.11.2021
(51) Int. Cl.: F16P 3/14

(54) **PROTECTION DEVICE**

(30) Priority: 05.11.2020 ES 202031112
(71) Applicant: Martinez Sanchez, José Maria, 03300 Orihuela (Alicante) (ES)
(72) Inventor: Martinez Sanchez, José Maria, 03300 Orihuela (Alicante) (ES)
(74) Representative: Herrero & Asociados, S.L.

(57) **Abstract**

An accident protection device (100) for a tool (7) powered by a voltage transformer (14), the device comprises a fuse (11) connected between the tool (7) to the voltage transformer, a brush ( 4) configured to collect the moisture or dryness of the skin from the worker's hand, a galvanic response sensor (2) configured to obtain a skin conductance value based on the moisture or dryness collected by the brush (4), wherein the fuse (11) interrupts the flow of current between the voltage transformer (14) and the tool (7) if a voltage value generated by the conductance of the skin is greater than 1 millivolt.

## Description

### Object of the invention

The object of the present invention is a device for protection against accidents at work or at home.

### Background of the invention

Health and safety must be a fundamental part of the day-to-day life of any user of work tools, whether in the industrial or domestic fields. Establishing adequate prevention measures is vital.

Unfortunately, every year many workers and general tool users suffer damage and injuries caused by machines. Cuts, amputations, abrasions, crush injuries, burns, blows or punctures of the skin or impacts of particles, fragments or fluids projected into eyes, etc. are some of the consequences.

These events could be avoided by implementing new protection devices, which could quickly and safely take control of the machine, thus avoiding possible damage and / or injuries.

The present invention satisfies this demand.

### Description of the invention

The present invention refers to a control device with which it is intended to achieve the following objectives:
Increasing user protection in work accidents caused by industrial machines. 80% of these accidents occur for reasons that have their origin in the subconscious of the worker. Daily problems can occupy the mind of the worker predisposing it to accident, causing distraction, lack of concentration, etc.

Seeking greater safety both at a work, social and human level, thus avoiding all kinds of injuries, even as serious as an amputation, which may disable the worker to carry out his/her work activity, affect his/her family life, etc.

Avoiding possible damage to the industrial and business economy caused both by the need to replace the injured worker until his/her full recovery, and by preventing his/her professional continuity.

Allowing the installation thereof in small devices also giving a solution to accidents.

Providing the worker with a very cheap and affordable device.

Thus, in a first aspect, the invention relates to an accident protection device for a tool supplied by a voltage transformer. The device comprises a fuse connected between the work tool to the voltage transformer, a brush configured to collect moisture or dryness from the worker's hand, a galvanic response sensor configured to obtain a skin conductance value based on the moisture or dryness collected by the brush, and wherein the fuse interrupts the flow of current between the voltage transformer and the tool if a voltage value generated by skin conductance is greater than 1 millivolt.

The accident protection device further comprises a potentiometer adapted to regulate the sensitivity of the sensor.

The accident protection device also includes a fuse holder to house the fuse.

In another aspect, the present invention refers to a micro card comprising one or more elements of the accident protection device.

### Description of the drawings

To complement the description that is being made and in order to help a better understanding of the features of the protection device, according to an example of a practical embodiment thereof, a set of drawings is attached as an integral part of said description, wherein, for illustrative and non-limiting purposes, the following has been represented:
Figure 1 shows a diagram of the protection device according to the present invention.
Figures 2A and 2B show a representation of an integrated card comprising elements of the device according to the present invention.

### Preferred embodiment of the invention

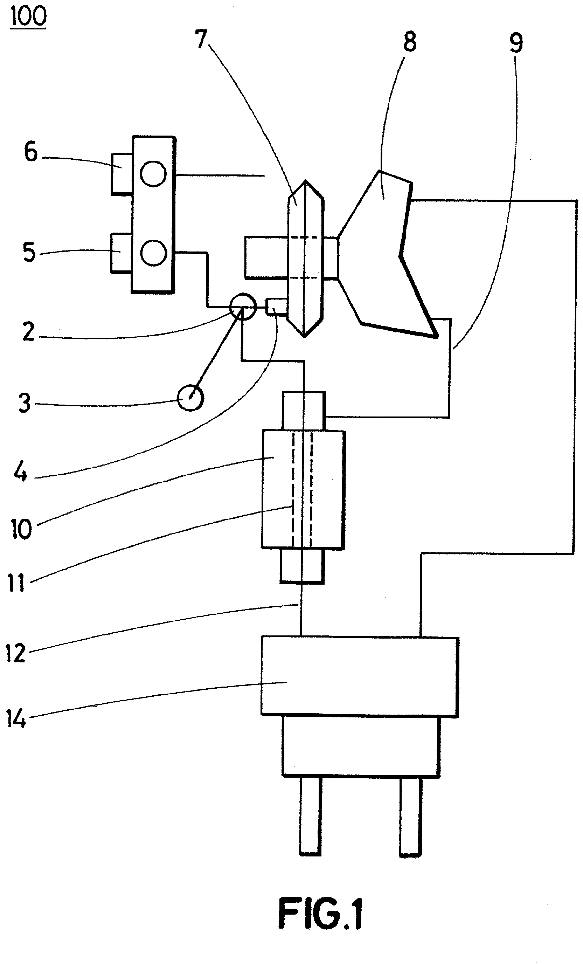

FIG. 1 shows an example of a device (100) according to the present invention, which comprises the following elements:
(2) sensor
(3) potentiometers
(4) brush
(9) current wire
(10) fuse holder
(11) fuse
(12) conductive wire

Other elements that appear in figure 1 and are not part of the invention:
(5) engine stop button
(6) motor drive button
(7) tool
(8) motor
(14) transformer

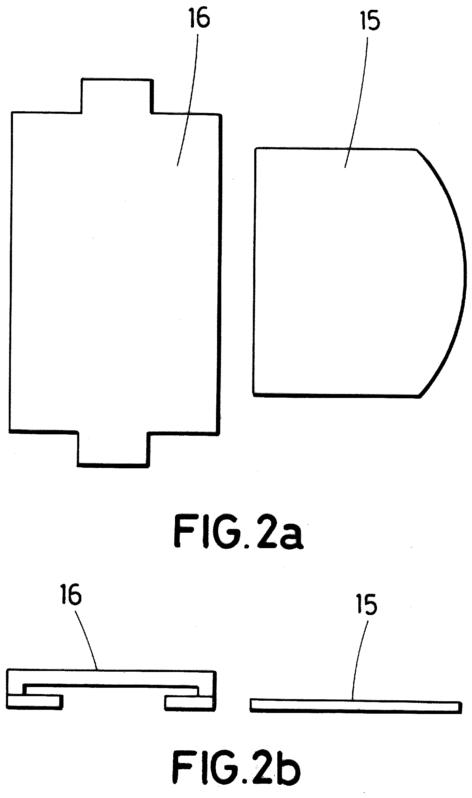

Figures 2A and 2B show a microchip that can comprise one or more elements comprised in the device (100). In particular, figure 2 shows:
(15) chip card
(16) box

In relation to figure 1, the device (100) comprises a sensor (2) of the galvanic response of human skin, the sensor (2) is a detector of human micro electricity, which can measure the conductance of human skin.

The device (100) comprises a potentiometer (3) that regulates the sensitivity of the device (100) through the sensor (2) to automatically adapt to every operator.

The device (100) is calibrated through the sensor (2), adjusting for example a user's hand with the skin of the user's hand being dry. Once the device (100) has been calibrated, the measurement of the galvanic response of the skin during the operation of the tool (7), by means of the sensor (2), allows detecting the existence of humidity or detecting the lack of humidity, that is, detecting dryness in the hand(s) and the rest of the body of the worker in contact with the tool (7). The wet skin can cause an insecure grip of the tool (7) causing an accident at work or at home, such as an injury. The tool (7) can be, for example, a saw.

The device (100) comprises a brush (4). The brush (4) is connected to the sensor (2) and is configured to collect moisture or dryness from the worker's skin.

The measurement of the micro-electricity of the worker's skin by means of the sensor (2), makes an overload of the electrical system of the device (100) possible through the actuation of the fuse (11), which, as it does not withstand an increase in voltage due to the micro-electricity / conductance generated by the galvanic response of the wet or dry skin of the user measured by the sensor (2), it blows, interrupting current supply to the motor (8), causing the tool to stop (7) and avoiding a possible accident.

The fuse (11) is supported by the fuse holder (10) as shown in figure 1.

Figure 1 also shows the actuation button (6) of a control panel connected to the electric wire (12) that comes from the opposite pole of the transformer (14). With the actuation button (6) the ignition of the engine (8) can also be activated voluntarily, or automatically. Additionally, figure 1 also shows a stop button (5) for stopping the motor (8) in connection with the current wire (9), thus cutting off the current input to the motor (8) in contact with the tool (7).

Figures 2A and 2B show a micro card (15) and the box (16) for the micro card (15). This card (15) allows one or more components of the device (100) to be housed and is cheaper and more convenient to install in the box (16) that can be installed in three-phase, single-phase machines, drills and household appliances, without having to alter the current housings inside, along with optimized micro-electro-brake.

## Claims

1. A device (100) for protection against accidents for a tool (7) powered by a voltage transformer (14), the device comprises:
- a fuse (11) connected between the tool (7) and the voltage transformer (14);
- a brush (4) configured to collect a moisture value from the skin of the worker's hand;
- a galvanic response sensor (2) configured to obtain a skin conductance value based on the moisture value collected by the brush (4),
wherein the fuse (11) interrupts the flow of current between the voltage transformer (14) and the tool (7) if a voltage value generated by the conductance of the skin is greater than 1 millivolt.

2. The accident protection device (100) according to claim 1, further comprising a potentiometer (3) adapted to regulate the sensitivity of the device (100).

3. The accident protection device (100) according to claims 1 or 2, further comprising a fuse holder (10) to house the fuse (11).

4. Micro card (15) comprising one or more elements of the elements of the accident protection device (100) according to claims 1 to 3.
